Europäisches Patentamt

European Patent Office

Office européen des brevets

(19)

(11) Publication number: **0 056 374**
**B1**

(12) **EUROPEAN PATENT SPECIFICATION**

(45) Date of publication of patent specification: 28.08.85

(21) Application number: 81901480.4

(22) Date of filing: 27.05.81

(86) International application number:
PCT/US81/00713

(87) International publication number:
WO 81/03533 10.12.81 Gazette 81/29

(51) Int. Cl.⁴: **F 16 K 3/20, F 16 K 25/00**

(54) **GUILLOTINE DAMPER.**

(30) Priority: 29.05.80 US 154476

(43) Date of publication of application:
**28.07.82 Bulletin 82/30**

(45) Publication of the grant of the patent:
**28.08.85 Bulletin 85/35**

(84) Designated Contracting States:
**DE**

(56) References cited:
DE-A-2 535 629
DE-A-2 719 164
US-A-1 727 628
US-A-1 762 818
US-A-1 867 349
US-A-2 251 481
US-A-2 253 888
US-A-2 702 178
US-A-3 007 490
US-A-3 109 457

(73) Proprietor: BACHMANN INDUSTRIES, INC.
**29 Lexington Street**
**Lewiston, ME 04240 (US)**

(72) Inventor: BACHMANN, Lothar
**Dillingham Road, RFD 3**
**Auburn, ME 04210 (US)**
Inventor: POWELL, John A.
**Yarmouth Woods Apartment 5J**
**Yarmouth, ME 04096 (US)**
Inventor: TURNER, Ralph W.
**1477 River Road**
**Brunswick, ME 04011 (US)**

(74) Representative: Kraus, Walter, Dr. et al
**Patentanwälte Kraus Weisert & Partner Thomas-**
**Wimmer-Ring 15**
**D-8000 München 22 (DE)**

Courier Press, Leamington Spa, England.

## Description

The invention relates to a guillotine damper for use in blocking the flow of fluid through a duct, the damper including a chamber to which upstream and downstream duct sections are to be connected and provided with interconnected upstream and downstream gateways, a blade mounted for movement between a first position outside the chamber in which the flow path through the chamber is unobstructed and a second position within the chamber in which the flow path is blocked, means operable to move the blade between said positions, a seat mounted on the downstream gateway and continuously surrounding the flow path, a thrust frame between the gateways and on the upstream side of the blade path and including a seal for engagement with the seat or the blade and surrounding the flow path through the chamber, and means operable to move the thrust frame between operative positions in which the seal is in engagement with the seat when the duct is unobstructed or with the blade when the duct is blocked and a retracted position in which the seal is out of the blade path, said means including a series of toggle joints spaced apart from the flow path, and connected to damper structure and to the thrust frame and means operable to actuate the toggle joints to effect the operative and retracted positions.

Such guillotine dampers are for use in isolating sections of ducts of large cross sectional areas such as those for the exhaust gases of such plants as coal fired electric utility plants. Such duct sections contain gas scrubbers and in order that a scrubber may be serviced, personnel must enter the duct section in which it is located making it essential that isolating dampers be employed that are operable to ensure zero leakage.

One type of guillotine damper as described in DE—A—2 719 164 is provided with thrust frames having a marginal seal and means to move the frames into an operative position in which the seal either engages the blade, if in a position to block the fluid, or a seat which is exposed when the blade is retracted. In this guillotine damper there is employed a series of springs and a series of fluid pressure operated devices, the former to seat the thrust frames and the latter to retract them. The dampers have outwardly disposed flanges. Springs backed by the flanges exert their pressure directly against the frame. Pressure operated devices mounted on the opposite sides of the flanges are connected by pull rods to the margins of the thrust frames. It is apparent that the resistance offered by the springs and the pressure on the thrust frame increased as the thrust frames were withdrawn, and that both forces were applied in directions normal to the blade path.

Resilient means such as the aforementioned series of springs in the guillotine dampers according to DE—A—2 719 164 or spring packs applied to maintain the guillotine damper in its operative position are provided in order to avoid the use of energy to move and hold the thrust frame in its operative position with fluid pressure operated means employed to retract the frames whenever a blade was to be moved either into or out of its operative position. One such construction utilized a substantial number of spring packs along the sides of the thrust frame with a retraction jack between each two spring packs.

A guillotine damper of the above indicated type to which the invention relates is described in DE—A—2 535 629 which relates to a shutter valve for large diameter gas ducts, especially those of blast furnaces. The shutter valve utilizes a movable valve seat and a stationary seat with the movable seat provided with a series of toggle joints with one arm of each joint pivotally connected to a cup containing a stack of cup springs and carried by the movable seat. A ring rotatable through a minor arc has the knee pivot of each toggle joint pivotally connected thereto. The ring, when rotated in one direction, by means of a hydraulic cylinder straightened the joints to an extent pushing the movable seat towards the fixed seat and against a sliding shutter plate when operatively positioned, and in this operative position the cup springs are pressing the movable seat against the fixed seat or the shutter plate. The ring, when rotated in the other direction, causes the toggle joints to exert a retracting force on the movable seat. The function of the resilient units is that of equalizing pressures to prevent binding, and the direction of their forces are normal relative to the seats.

The problem with guillotine dampers employing fluid under pressure to move thrust frames both into and out of their operative positions is the substantial cost resulting from the maintenance of the pressure required to hold the frames in their operative positions.

The problem with guillotine dampers utilizing springs to hold their frames in their operative positions and fluid pressure operated devices to retract their frames is that the springs and devices exert their forces in directions normal to the blade path and have separate connections with the frames. In addition, frame retraction is attended by compression of the spring with increased pressure on the frames.

Object of the invention is, accordingly, to provide a guillotine damper, in which a series of units are incorporated with the units spaced apart about the flow path. Each unit includes hydraulically operated means and resilient means so combined that the force exerted by each is in a direction opposite that exerted by the other and with both forces exerted in a plane parallel to the path of the blade. A series of toggle joints are provided for each unit with each pivotally connected to the frame and to downstream structure. Actuating means common to both means of each unit and moved by either of them, are pivotally connected to the knee pivots of the associated series of toggle joints with the thrust frame operatively positioned by the resilient means of the several units and retracted by the hydraulically operated means while operated to overcome the opposition of the resilient means.

This object is achieved by a guillotine damper of the above indicated type which is characterized in that a series of units are spaced about the flow path with each unit including hydraulically operated means, resilient means and an intermediate member so combined that the forces exerted by each of said means are exerted against said intermediate member in a direction opposite to that exerted by the other, each unit is mounted on the downstream face of the upstream gateway and so disposed that said forces are exerted in a plane parallel to the plane of the path of the blade, a series of toggle joints is provided for each unit with the joints pivotally connected to the upstream gateway and to the frame and with their knee pivots in the plane of said forces, an actuator interconnects said intermediate member and the knee pivots, the resilient means of the units are operable to so move the actuator as to force the toggle joints to establish and maintain the frame in the appropriate one of the operative positions under a wanted pressure, and an hydraulic system is provided which includes valve controlled means operable to deliver liquid under pressure to each of said hydraulically operated means and thereby to move the actuator to force the toggle joints to retract the frame against the resistance of each of the resilient means and then to release the hydraulic pressure thereby to enable the resilient means of the units to reestablish the appropriate one of the operative positions.

The units possess the advantages that they may be confined between fixed upstream structure spaced close to the thrust frame and that each exerts force against a considerable marginal portion of the thrust frames by means of its series of toggle joints.

The hydraulically operated means of each unit is desirably a hydraulically operated bellows and the resilient means consists of a number of spring washers arranged in groups with alternate groups oppositely disposed. The intermediate member between the hydraulically operated means and the resilient means is moved by the dominant one of them, and the actuator preferably comprises a connecting rod pivotally connected to the intermediate member and the knee pivots of the associated toggle joints of which there may be two series, each series extending lengthwise of the unit along opposite sides thereof and connected to the plate. This construction not only ensures that the units provide adequate forces on the thrust frame dependent on the number of units employed and the number of toggle joints with which each unit is provided but also ensures ease and convenience in their installation and service. The disposition of the units enables the units to be sealed from exposure to the flue gases by means of flexible seals, one connected to upstream structure and to the thrust frame and another connected to structure outwardly to the flow path and also to the thrust frame. Where the damper includes a bonnet to house the blade when retracted normally closed ports in the bottom of the damper and in the upper end of the bonnet enable the spaces surrounding the sealed zone and the bonnet to be vented when the thrust frame is operatively positioned.

Further developments of the invention are defined by the subclaims.

Brief Description of the Drawings

The details of the invention will be described in connection with the accompanying drawings in which—

Fig. 1 is a schematic view illustrating a divided duct with each branch equipped with dampers enabling the gas scrubber between them to be isolated;

Fig. 2 is a side view of a guillotine damper in accordance with the invention;

Fig. 3 is an end view thereof taken along the indicated line 3—3 of Figure 2;

Fig. 4 is a section, on an increase in scale, taken approximately along the indicated line 4—4 of Figure 3;

Fig. 5 is a section, on an increase in scale lengthwise of the thrust frame actuating device shown in Figure 4;

Fig. 6 is a fragmentary section, on a further increase in scale, taken approximately along the indicated line 6—6 of Figure 3;

Fig. 7 is a like section taken approximately along the indicated line 7—7 of Figure 3;

Fig. 8 is another like section taken approximately along the indicated line 8—8 of Figure 3; and

Fig. 9 is a schematic view of the hydraulic system.

Best Mode for Carrying Out the Invention

Guillotine dampers are used in the duct work of coal fired, steam operated generating plants, paper mills, and cement and incinerator plants as examples of exhaust systems incorporating gas processing equipment of which gas scrubbers are an important example.

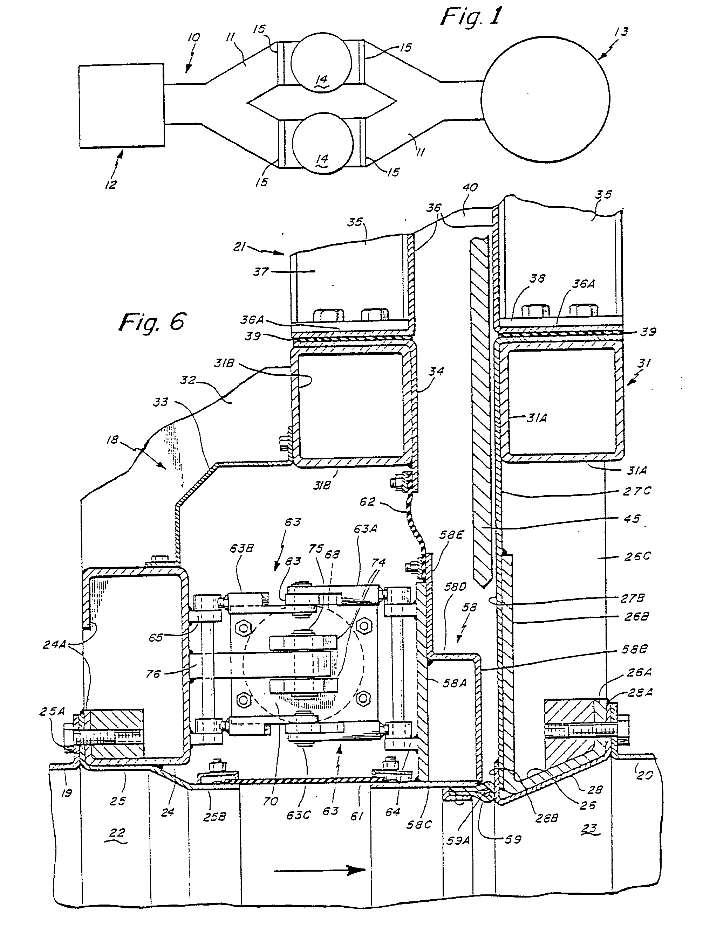

In order that such equipment may be serviced without requiring a shut down, the duct work, generally indicated at 10 and shown schematically in Figure 1 on a much simplified basis, includes parallel branches 11 between the boiler 12 and the stack 13 with each branch equipped with a gas scrubber 14. With a guillotine damper 15 installed upstream and downstream of each gas scrubber 14, that gas scrubber may be safely serviced if the associated dampers 15 are capable of so preventing leakage that the gas scrubber is completely isolated.

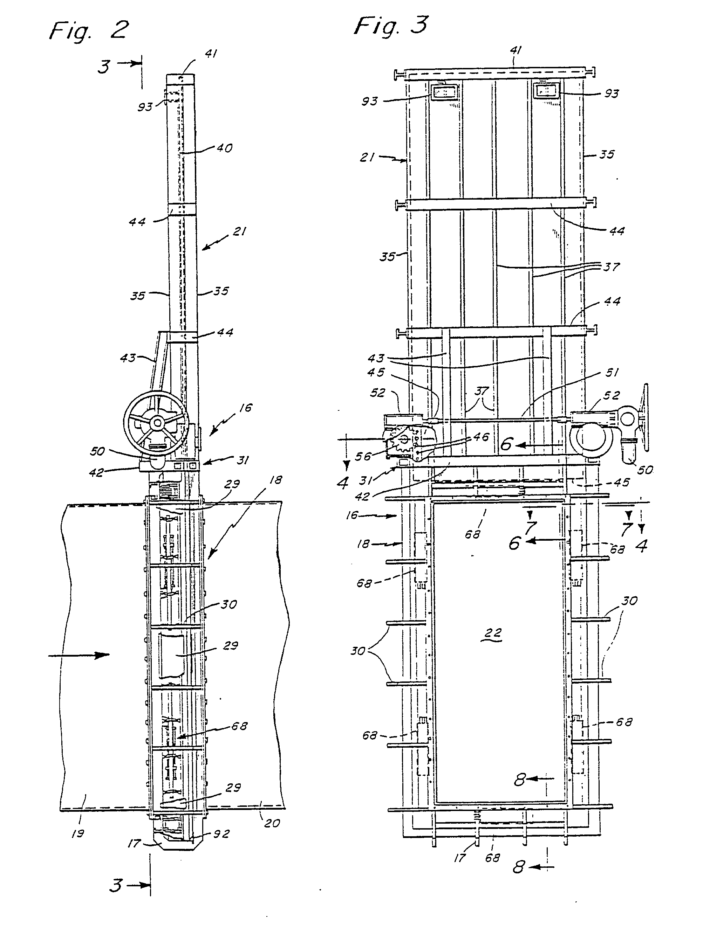

Guillotine dampers in accordance with the present invention are well adapted for use in duct work to isolate gas processing equipment, particularly gas scrubbers, where zero leakage must be assured. Such a guillotine damper is generally indicated at 16 in Figures 2 and 3 and is in the form of a chamber supported by a base 17 and including a main section, generally indicated at 18 to which flanged ends of upstream and downstream duct sections 19 and 20, respectively, are secured. The chamber also includes an air tight bonnet section, generally indicated at 21.

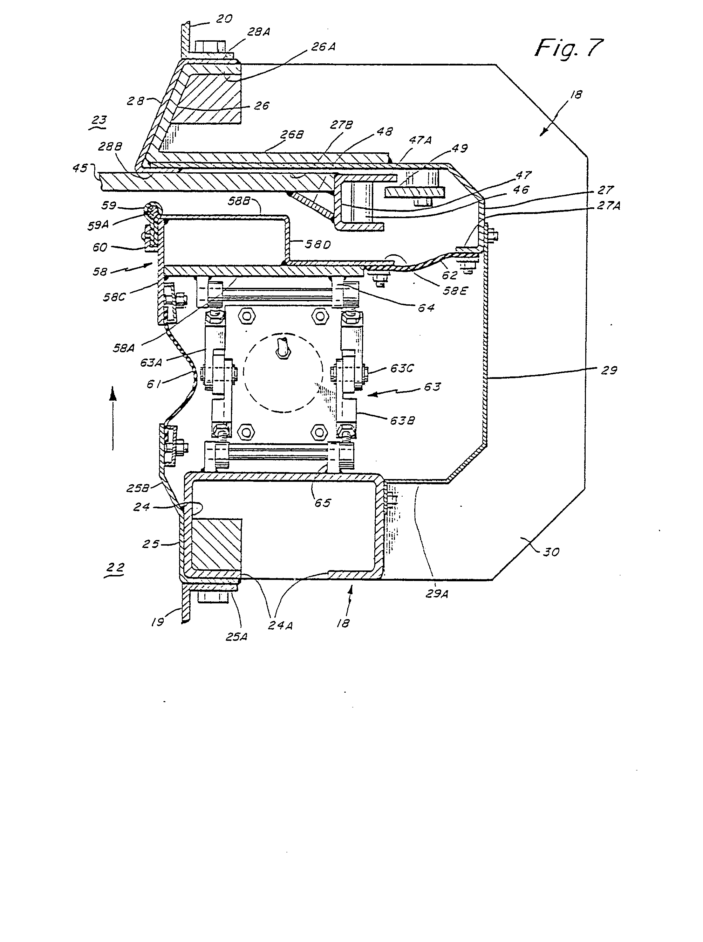

The main section 18, see Figures 6, 7, and 8, has front or upstream and a rear or downstream wall structure forming gateways 22 and 23, respectively, that are rectangular and of the size and shape of the duct sections. The upstream wall structure consists of a frame 24 defining the gateway 22 of the channel stock having inturned flanges 24A. A frame 25 of corrosion resistant alloy, in practice nickel alloy is welded to the inner walls of the frame 24 and has a flange 25A welded to the frame flange 24A and a free, downstream end section 25B extending beyond the frame 24 and inwardly offset relative thereto. The flanged end of the duct section 19 is bolted to the flange 24A through the flange 25A.

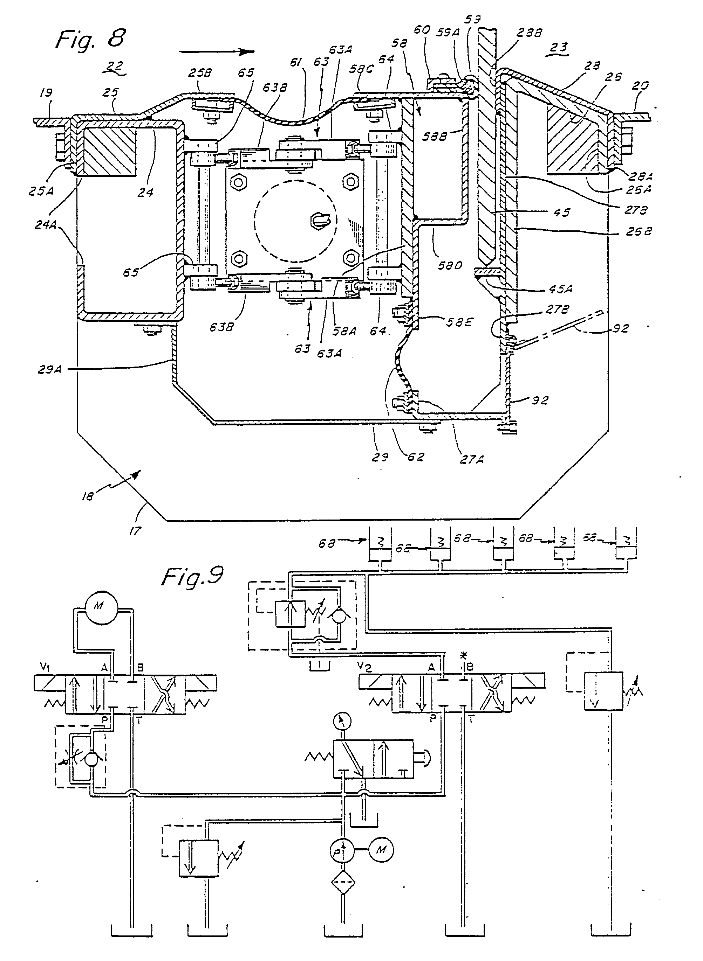

The downstream wall structure includes a frame 26 establishing the gateway 23 and formed with an outer offset flanged end 26A and an inner flanged end 26B of substantial extent. A downstream housing section 27, see Figures 7 and 8, has a flanged inner end 27A and an outer end wall 27B welded to the inner surface of the frame flange 26B. A frame 28 of nickel alloy is welded to the frame 26 and has an outer flange 28A overlying and welded to the flange 26A and an inner flange 28B overlying the inner margin of the inner flange 26B and welded to the housing end wall 27B. The flange 28B constitutes a seal seat. An upstream housing section 29 is bolted to the housing section 27 and has a flanged front wall 29A bolted to the sides and bottoms of the frame 24. Spaced reinforcements 30 also interconnect the upstream and downstream wall structures.

The sides of the downstream frame 26 are connected as at 26C, see Figure 6, to a frame, generally indicated at 31 which has parallel beams 31A and 31B. The outer end wall 27B of the housing section 27 has an upper end section 27C welded to the inner and top surfaces of the beam 31A. The top of the frame is connected by braces 32 to the beam 31B. A housing cover 33 is attached to the top of the frame 24 and the beam 31B. The inner and upper faces of the beam 31B have a protective sheet 34 of a non-conductive alloy welded thereto.

The bonnet section 21 includes spaced apart, upstream and downstream portions with each portion having end channel members 35 welded to the appropriate one of the beams of the frame 31 with a wall 36 of a non-corrosive alloy or of stainless steel secured thereto and to vertical reinforcements 37. The bottom edge 36A of each wall 36 extends at right angles to overlie the appropriate beam of the frame 31. A hold-down strip 38 overlies the wall edge 36A and is connected therethrough and through a seal 39 to the subjacent beam. The space between the two bonnet portions is closed by side walls 40 and the upper end of the bonnet section 21 is closed by a cap 41. The frame 31 supports a platform 42 connected by braces 43 to the lowermost one of vertically spaced reinforcements 44 which interconnect the bonnet portions. The sides of the frame 24 extend beyond the top thereof in support of the platform.

A blade or gate 45 within the damper 16 has rack 46, see Figures 3, 4, and 7, extending along each side edge. Each rack includes a U-shaped holder 47, best seen in Figure 7, welded to the blade and braced as at 48. The wall 47A of each holder is loosely confined by retainers 49 spaced vertically along the inner surface of the end wall 27B of the housing section 27 thus to hold the blade close to the seat 28B but free to be moved a short distance towards and away therefrom.

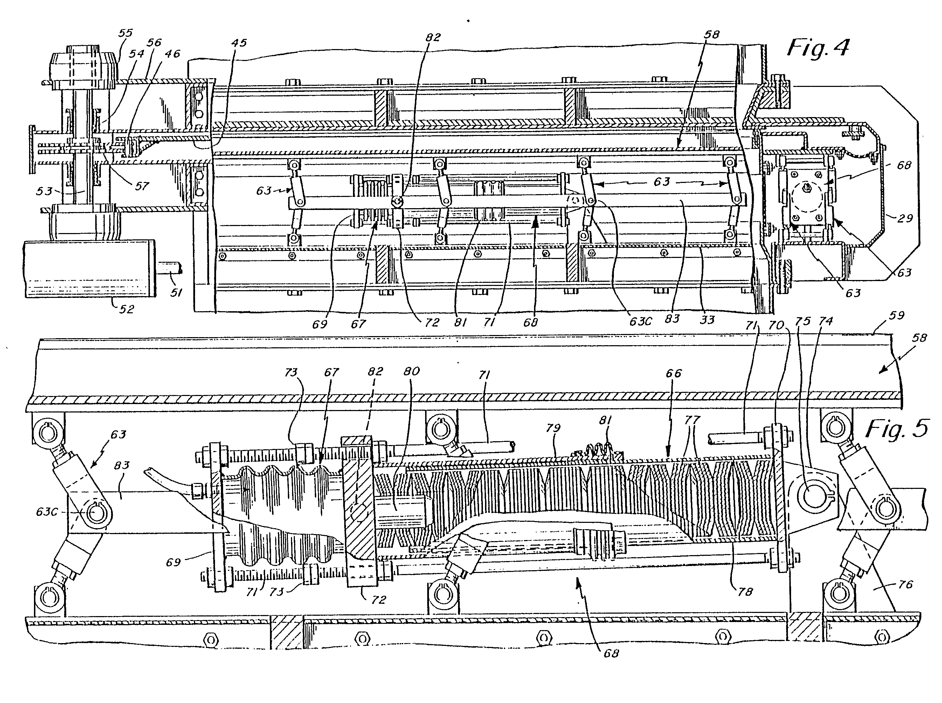

A reversible drive motor 50, in the disclosed embodiment a hydraulic motor, is mounted on one end of the platform 42, see Figures 2, 3, and 4, and drives a shaft 51 common to the two gear boxes 52 each of which is located adjacent opposite ends of the platform with its driven shaft 53, see Figure 4, extending through seals 54 carried by the walls 36 of the bonnet and by bearings 55 held in mounts 56. The shafts 53 are provided with pinions 57 in mesh with the appropriate one of the racks 46.

By means of such a drive or other suitable drive, the blade 45 is moved along a vertical path transversely of the gas flow path through the chamber between a first position within the bonnet section 21 in which the flow path is unblocked and a second position blocking flow through the gateway 23 with its bottom edge seated on the blade stop 45A, see Figure 8.

In order that the blade 45, when in its second position will be operative to block the flow of gas through the gateway 23 and in order that gas cannot escape from the flow path when the blade 45 is in its first position within the bonnet section 21, a thrust frame generally indicated at 58 is provided on the upstream side of the path of the blade 45 and supported by means presently to be described by which it may be moved towards and away from the seat 28B. The frame 58 is provided with a seal 59 held in a socket 60 attached to and extending about the inside surface of the frame 58 and protruding beyond the plane of the front wall of the frame for sealing contact with the seat 28B or with the blade 45. A seal 59 is formed as by holding a strip about an asbestos cores 59A with the ends of the strip locked in the socket 60. The strip from which the seal is formed is, for example, a lamination of asbestos or glass fabrics reinforced elastomer layers that provide a seal that is sufficiently deformable under sealing pressures to seal about any encrusted area or areas on the seat 28B.

The thrust frame 58 includes a rear wall 58A and a front wall 58B spaced therefrom but connected thereto by inner and outer side walls 58C and 58D, respectively. The front wall 58B and the side wall 58D may be of stainless steel but the side wall 58C is, in the disclosed embodiment, of nickel alloy. The side wall 58C to which the seal 59 is secured extends beyond the rear wall 58A to which it is welded with its extremity connected to the extremity 25B of the upstream frame 24 by a flexible seal 61. The side wall 58D is welded to the rear wall 58A and has a section 58E overlying the rear wall and extending beyond it with its extremity connected to the flange 27A of the housing section 27 by a flexible seal 62. The seals 61 and 62 are of materials adapted to withstand abrasion and the temperatures of and the corrosive attacks of the flue gases and may be of the type consisting of layers of asbestos or glass fiber fabrics with elastomeric, stainless steel, or nickel alloy reinforcements as required to ensure long life.

In accordance with the present invention, the thrust frame 58 is supported at spaced intervals by toggle joints, generally indicated at 63 with one arm 63A of each toggle joint pivotally connected to ears 64 on the rear wall 58A of the thrust frame and the other arm 63B pivotally connected to ears 65 on the proximate face of the frame 24 of the upstream wall structure.

The toggle joints 63 are also components of devices by which either the seal 59 is held under substantial pressure against the seat 28B or against the thrust frame 58 to hold it against the seat or forcibly withdraw the thrust frame from the path of the blade 45 when the blade is to be moved from one position to the other. The devices are provided with means to effect such thrust frame movements, such means including resilient means normally operable to position and hold the thrust frame in an operative position and hydraulically operated means to retract the pressure frame.

One resilient means, generally indicated at 66, and one hydraulically operated means, shown as a bellows 67 effect the simultaneous movement of a series of toggle joints, in the disclosed embodiment, a series of four such joints. These are combined as a single unit, generally indicated at 68 in opposition to each other.

Each unit 68, see Figure 5, has end plates 69 and 70 interconnected by a series of tie rods 71 which slidably support an intermediate plate 72. A bellows 67 is confined between the end plates 69 and the intermediate plate 72 towards the end plate 69 is limited by stops 73 adjustably threaded on the tie rods. A resilient means 66 is confined between the end plate 70 and the intermediate plate 72. The end plate 70 of each unit 68 has ears 74 connected by a pivot 75 to an ear 76 fixed on the frame 24.

Each resilient means 66 includes groups of parallel spring washers 77, in practice four spring washers in each group with the groups arranged in series. It will be appreciated that the number of spring washers 77 in each group and the number of groups employed depends on the wanted pressure that is to be exerted by each device. The resilient means 66 includes a housing 78 fixed on the end plate 70 which is dimensioned to hold the stacked spring groups in position and to slidably enter a housing 79 fixed on the intermediate plate 72 which is provided with a centering pin 80 holding centered the groups of washers that are within the slightly oversized housing 79. A boot 81 seals the gap between the two housing sections 78 and 79.

The intermediate plate 72 has oppositely disposed pivots 82, one for each series of toggle joints 63 and in support of a connecting actuator rod 83 which receives the pivot 63C of each toggle joint that connects the proximate ends of its arms 63A and 63B. In the disclosed embodiment the toggle joints are arranged with one spaced from the end of each unit that houses the resilient means and with two joints spaced from each other and from the other end thereof.

It is desired that the travel of the thrust frame 58 be short, approximately one and one-half inch by way of example and not of limitation. Each resilient means 66 must be capable of exerting a sealing pressure which may be a high as 1,500 lbs. p.s.i. or higher in the case of some installations. The toggle joints are spaced as required. In the disclosed embodiment, the toggle joints may be spaced apart a distance in the eighteen to twenty-four inch range by way of example and not of limitation. The disclosed embodiment has gateway dimensions of seven feet by fourteen feet with one device at the top, one device at the bottom and two devices at each side.

Turning now to the hydraulic system by which the bellows 67 are subjected to or relieved by operating pressures, reference is made to Figure 9. A motor driven pump is operable to deliver oil under a predetermined pressure through a conduit provided with a control valve, a pressure regulator and a manifold with which each bellows 67 is in communication when the valve is set for the purpose of retracting the thrust frame 58.

The pump is also operable to deliver oil under a controlled pressure through a flow control and a valve, when appropriately set, to the hydraulic motor 50 and thence through the return line back to source. The valve is also capable of being set to drain the motor 50. When the blade 45 has been moved from one position to the other, the valve is shifted to relieve the several bellows of operating pressure and return the oil through the line to source. Should the thrust frame 58 be stuck, the pressure regulator may be adjusted to increase the retracting force.

It will be noted from Figures 2 and 3 that at each side and adjacent the bottom of the main section 18 of the damper, there are normally closed ports 92 and normally closed ports 93 at each side of and adjacent the upper end of the bonnet section 21. When the thrust frame 58 is operatively positioned, the spaces surrounding the then sealed flow path and the bonnet may be vented by opening the ports 92 and 93.

## Claims

1. A guillotine damper (16) for use in blocking the flow of fluid through a duct (19, 20), said damper (16) including a chamber to which upstream and downstream duct sections (19, 20) are to be connected and provided with interconnected upstream and downstream gateways (22, 23), a blade (45) mounted for movement between a first position outside said chamber in which the flow path through the chamber is unobstructed and a second position within said chamber in which the flow path is blocked, means (50) operable to move said blade (45) between said positions, a seat (28B) mounted on the downstream gateway (23) and continuously surrounding the flow path, a thrust frame (58) between said gateways (22, 23) and on the upstream side of the blade path and including a seal (59) for engagement with said seat (28B) or the blade (45) and surrounding the flow path through the chamber, and means (63, 68) operable to move said thrust frame (58) between operative positions in which the seal (59) is in engagement with the seat (28B) when the duct (19, 20) is unobstructed or with the blade (45) when the duct (19, 20) is blocked and a retracted position in which the seal (59) is out of the blade path, said means including a series of toggle joints (63) spaced apart about the flow path, and connected to damper structure (24) and to said thrust frame (58) and means (68) being operable to actuate the toggle joints (63) to effect said operative and retracted positions, characterized in that a series of units (68) are spaced about the flow path with each unit (68) including hydraulically operated means (67), resilient means (66) and an intermediate member (72) so combined that the forces exerted by each of said means (66, 67) are exerted against said intermediate member (72) in a direction opposite to that exerted by the other, each unit (68) is mounted on the downstream face of the upstream gateway (22) and so disposed that said forces are exerted in a plane parallel to the plane of the path of the blade (45), a series of toggle joints (63) is provided for each unit (68) with the joints (63) pivotally connected to the upstream gateway (22) and to said thrust frame (58) with their knee pivots (63C) in the plane of said forces, an actuator (83) interconnects said intermediate member (72) and said knee pivots (63C), the resilient means (66) of the unit (68) are operable to so move said actuator (83) as to force the toggle joint (63) to establish and maintain said frame (58) in the appropriate one of said operative positions under a wanted pressure, and an hydraulic system is provided which includes valve controlled means operable to deliver liquid under pressure to each of said hydraulically operated means (67) and thereby to move the actuator (83) to force said toggle joints (63) to retract said frame (58) against the resistance of each of said resilient means (66) and then to release the hydraulic pressure thereby to enable the resilient means (66) of the units (68) to re-establish the appropriate one of said operative positions.

2. The damper according to claim 1, characterized in that each device includes a second series of spaced toggle joints (63), and a second actuator (83) is pivotally connected to the knee pivots (63C) thereof and to the member (72) of the unit (68), the two series of toggle joints (63) and the actuators (83) thereof on opposite sides of the unit (68).

3. The damper according to claim 1, characterized in that the blade moving means (50) includes a hydraulic motor and valve controlled means incorporating said motor in the hydraulic system.

4. The damper according to claim 1, characterized in that the resilient means (66) includes a substantial number of spring washers (77) consisting of a plurality of groups of washers (77) arranged in parallel, the groups are arranged in series, and means (78, 80) holding the groups in the form of a stack while permitting the groups to flex.

5. The damper according to claim 1, characterized in that each unit includes end plates (69, 70) and the intermediate member (72) is an intermediate plate (72) whereby said end plates (69, 70) are interconnected by tie rods (71) which slidably support said intermediate plate (72) for limited movement relative to said end plates (69, 70), and in which the hydraulically operated means (67) betwen said intermediate plate (72) and one end plate (69) and the resilient means (66) between said intermediate plate (72) and the other end plate (70) and the actuator (83) is connected to said intermediate plate (72).

6. The damper according to claim 1, characterized in that at least one toggle joint (63) is spaced from each end of each unit (68).

7. The damper according to claim 5, characterized in that said other plate (70) of each unit (68) and the proximate face of the intermediate plate (72) include housing (78, 79), the housing (79) of the intermediate plate (72) extending freely within the end plate housing (78), a flexible seal (81) interconnects the two housings (78, 79), and the resilient means (66) are within said housing (78, 79).

8. The damper according to claim 5, characterized in that each tie rod (71) includes a fixed stop (73) against which the intermediate plate (72) is seated by resilient means (66).

9. The damper according to claim 1, characterized in that the portion of the chamber in which the blade (45) is located in the first position thereof is a closed bonnet (21) and the chamber has normally closed ports (92, 93) located adjacent the bottom thereof and adjacent the upper end of the bonnet (21) to enable the space within the chamber surrounding the flow path to be vented when the thrust frame (58) is operatively positioned.

10. The damper according to claim 1, characterized in that a flexible seal (61) surrounds the flow path and is connected to the thrust frame (58) and the inner margins of said upstream gateway (22), a flexible seal (59) surrounds said frame (58) and is connected thereto and to said downstream gateway (23) and the connection between said gateways (22, 23) is a protective outer wall (29).

## Patentansprüche

1. Parallelschieber (16) zur Verwendung beim Sperren der Strömung eines Strömungsmittels durch einen Kanal (19, 20), wobei dieser Schieber (16) folgendes aufweist: eine Kammer, mit der ein stromaufwärtiger und stromabwärtiger Kanalabschnitt (19, 20) verbindbar und mit einem stromaufwätigen und stromabwärtigen Torweg (22, 23), welche miteinander verbunden sind, versehen sind; einen Schild (45), der zur Bewegung zwischen einer ersten Position außerhalb der Kammer, in welcher der Strömungsweg durch die Kammer unversperrt ist, und einer zweiten Position innerhalb der Kammer, in welcher der Strömungsweg gesperrt ist, montiert ist; eine Einrichtung (50), die derart betätigbar ist, daß sie den Schild (45) zwischen diesen Positionen bewegt; einen Sitz (28B), der auf dem stromabwärtigen Torweg (23) angebracht ist und den Strömungsweg kontinuierlich umgibt; eine Schubrahmen (58), der sich zwischen den Torwegen (22, 23) und auf der stromaufwärtigen Seite des Schildwegs befindet und eine Dichtung (59) zum Eingriff mit dem Sitz (28B) oder dem Schild (45) aufweist, welche den Strömungsweg durch die Kammer umgibt; und eine Einrichtung (63, 68), die zum Bewegen des Schubrahmens (58) zwischen operativen Positionen, in denen sich die Dichtung (59), wenn der Kanal (19, 20) unversperrt ist, in Eingriff mit dem Sitz (28B) oder, wenn der Kanal (29) gespert ist, mit dem Schild (45) befindet, und einer zurückgezogenen Position, in welcher die Dichtung (59) außerhalb des Schildwegs ist, betreibbar ist, wobei diese Einrichtung eine Reihe von Gelenkhebeln (63) aufweist, die im Abstand voneinander um den Strömungsweg vorgesehen und mit dem Schieberaufbau (24) und dem Schubrahmen (58) verbunden sind; und eine Einrichtung (68), die zur Betätigung der Gelenkhebel (63) zum Bewirken der operativen und zurückgezogenen Positionen betreibbar ist, dadurch gekennzeichnet, daß eine Reihe von Einheiten (68) im Abstand voneinander um den Strömungsweg vorgesehen ist, wobei jede Einheit (68) eine hydraulisch betätigte Einrichtung (67), eine elastische Einrichtung (66) und ein Zwischenteil (72) aufweist, die derart kombiniert sind, daß die Kraft, die von jeder dieser Einrichtungen (66, 67) ausgeübt wird, gegen das Zwischenteil (72) in einer Richtung ausgeübt wird, die entgegengesetzt zu der ist, die von der anderen ausgeübt wird; daß jede Einheit (68) auf der stromabwärtigen Fläche des stromaufwärtigen Torwegs (22) angebracht und so vorgesehen ist, daß diese Kräfte in einer Ebene ausgeübt werden, die parallel zu der Ebene des Weges des Schilds (45) ist; daß eine Reihe von Gelenkhebeln (63) für jede Einheit (68) vorgesehen ist, wobei die Gelenkhebel (63) schwenkbar mit dem stromaufwärtigen Torweg (22) und mit dem Schubrahmen (58) verbunden sind und sich ihre Kniedrehachsen (63C) in der Ebene dieser Kräfte befinden; daß ein Betätiger (83) das Zwischenteil (72) und die Kniedrehachsen (63C) miteinander verbindet; daß die elastischen Einrichtungen (66) der Einheiten (68) so betreibbar sind, daß sie den Betätiger so bewegen, daß die Gelenkhebel dazu gezwungen werden, den Rahmen (58) in die angemessene eine der operativen Positionen unter einem gewünschten Druck festzustellen und zu halten; und daß eine Hydraulikanordnung vorgesehen ist, die eine ventilgesteuerte Einrichtung aufweist, welche so betreibbar ist, daß sie Flüssigkeit unter Druck an jede der hydraulisch betätigten Einrichtungen (67) abgibt und dadurch den Betätiger so bewegt, daß die Gelenkhebel (63) gezwungen werden, den Rahmen (58) gegen den Widerstand von jeder der elastischen Einrichtungen (66) zurückzuziehen und dann den Hydraulikdruck zu entspannen, so daß dadurch die elastischen Einrichtungen (66) der Einheiten (68) befähigt werden, die angemessene eine der operativen Positionen erneut einzunehmen.

2. Schieber nach Anspruch 1, dadurch gekennzeichnet, daß jede Einrichtung eine zweite Reihe von im Abstand voneinander befindlichen Gelenkhebeln (63) aufweist, so daß ein zweiter Betätiger (83) schwenkbar mit den Kniedrehachsen (63C) derselben und mit dem Teil (72) der Einheit (68) verbunden ist, wobei die beiden Reihen von Gelenkhebeln (63) und die Betätiger (83) derselben auf entgegengesetzten Seiten der Einheit (68) sind.

3. Schieber nach Anspruch 1, dadurch gekennzeichnet, daß die Schildbewegungseinrichtung (50) einen hydraulischen Motor und eine ventilgesteuerte Einrichtung aufweist, die den Motor in die hydraulische Anordnung einbezieht.

4. Schieber nach Anspruch 1, dadurch gekennzeichnet, daß die elastische Einrichtung (66) eine wesentliche Anzahl von Tellerfedern (77) aufweist, die aus einer Mehrzahl von Gruppen von Tellerfedern (77) bestehen, welche parallel angeordnet sind, wobei die Gruppen in Reihe angeordnet sind, und daß eine Einrichtung (78, 80) vorgesehen ist, welche die Gruppen in der Form eines Stapels hält, während sie es den Gruppen ermöglicht, sich zu biegen.

5. Schieber nach Anspruch 1, dadurch gekennzeichnet, daß jede Einheit Endplatten (69, 70) aufweist und daß das Zwischenteil (72) eine Zwischenplatte (72) ist, wodurch die Endplatten (69, 70) mittels Verbindungsstangen (71) miteinander verbunden sind, welche die Zwischenplatte (72) zur begrenzten Bewegung relativ zu den Endplatten (69, 70) verschiebbar halten und worin die hydraulisch betätigte Einrichtung (67) zwischen der Zwischenplatte (72) und einer Endplatte (69) und die elastische Einrichtung (66) zwischen der Zwischenplatte (72) und der anderen Endplatte (70) und der Betätiger (83) mit der Zwischenplatte (72) verbunden ist.

6. Schieber nach Anspruch 1, dadurch gekennzeichnet, daß wenigstes ein Gelenkhebel (63) im Abstand von jedem Ende von jeder Einheit (68) vorgesehen ist.

7. Schieber nach Anspruch 5, dadurch gekennzeichnet, daß die andere Platte (70) von jeder Einheit (68) und die proximale Fläche der Zwischenplatte (72) ein Gehäuse (78, 79) aufweist, wobei sich das Gehäuse (79) der Zwischenplatte (72) frei innerhalb des Endplattengehäuses (78) erstreckt, wobei eine flexible Dichtung (81) die beiden Gehäuse (78, 79) miteinander verbindet, und die elastischen Einrichtungen (66) innerhalb des Gehäuses (78, 79) sind.

8. Schieber nach Anspruch 5, dadurch gekennzeichnet, daß jede Verbindungsstange (71) einen festen Anschlag (73) aufweist, an dem die Zwischenplatte (72) durch die elastische Einrichtung (66) aufsitzt.

9. Schieber nach Anspruch 1, dadurch gekennzeichnet, daß der Teil der Kammer, in dem sich der Schild (45) in seiner ersten Position befindet, eine geschlossene Haube (21) ist und daß die Kammer normalerweise geschlossene Kanäle (92, 93) hat, die benachbart dem Boden derselben und benachbart dem oberen Ende der Haube (21) angeordnet sind, so daß es ermöglicht wird, daß der Raum innerhalb der Kammer, der den Strömungsweg umgibt, durchlüftet wird, wenn der Schubrahmen (58) operativ positioniert wird.

10. Schieber nach Anspruch 1, dadurch gekennzeichnet, daß eine flexible Dichtung (61) den Strömungsweg umgibt und mit dem Schubrahmen (58) sowie den inneren Rändern des stromaufwärtigen Torwegs (22) verbunden ist, daß eine flexible Dichtung (59) den Rahmen (58) umgibt und damit sowie mit dem stromabwärtigen Torweg (23) verbunden ist und daß die Verbindung zwischen den Torwegen (22, 23) eine äußere Schutzwand (29) ist.

**Revendications**

1. Registre à guillotine (16), utilisable pour interrompre la circulation d'un fluide dans un conduit (19, 20), ledit registre (16) comprenant une chambre, à laquelle des parties amont et aval (19, 20) du conduit doivent être raccordées et qui est munie de manchettes amont et aval interconnectées (22, 23), une lame (45) montée de manière à se déplacer entre une première position à l'extérieur de la chambre, dans laquelle le passage du fluide à travers la chambre est non obstrué, et une deuxième position à l'intérieur de la chambre, dans laquelle le passage du fluide est obstrué, des moyens (50) manoeuvrables pour déplacer la lame (45) entre les dites positions, un siège (28B) monté sur la manchette aval (23) et entourant de façon continue le passage du fluide, un cadre de poussée (58) situé entre les manchettes (22, 23) et du côté amont du chemin de la lame et comportant une garniture d'étanchéité (59) qui peut venir en contact avec le siège (28B) ou la lame (45) et qui entoure le passage de fluide dans la chambre, et des moyens (63, 68) manoeuvrables pour déplacer le cadre de poussée (58) entre des positions actives, dans lesquelles la garniture d'étanchéité (59) est en contact avec le siège (28B) lorsque le conduit (19, 20) est non obstrué ou avec la lame (45) lorsque le conduit (19, 20) est obstrué, et une position rétractée, dans laquelle la garniture d'étanchéité (59) est en dehors du chemin de la lame, ces moyens comprenant une série de joints à bascule (63) espacés autour du passage de fluide et reliés à une structure de registre (24) et au cadre de poussée (58), les moyens (68) étant manoeuvrables pour actionner les joints à bascule (63) afin de prendre les dites positions actives et rétractée, caractérisé en ce qu'une série d'unités (68) sont espacées autour du passage de fluide, chaque unité (68) comprenant des moyens (67) à commande hydraulique, des moyens élastiques (66) et un élément intermédiaire (72) combinés de sorte que les forces exercées par chacun des dits moyens (66, 67) s'exercent contre l'élément intermédiaire (72) en sens inverse de celles qui sont exercées par l'autre de ces moyens, chaque unité (68) est montée sur la face aval de la manchette amont (22) et est disposée de sorte que les dites forces s'exercent dans un plan parallèle au plan du chemin de la lame (45), une série de joints à bascule (63) est prévue pour chaque unité (68), les joints (63) étant reliés de façon pivotante à la manchette amont (22) et au cadre de poussée (58) de façon à ce que leurs articulations (63C) se trouvent dans le plan des dites forces, une barre de transmission (83) interconnecte l'élément intermédiaire (72) et les articulations (63C), les moyens élastiques (66) des unités (68) agissent de manière à déplacer la barre de transmission (83) afin de forcer les joints à bascule (63) à amener et maintenir le cadre (58) dans la position appropriée des dites positions actives sous une pression désirée, et un système hydraulique est prévu qui comporte des moyens de distribution manoeuvrables pour envoyer un liquide sous pression à chacun des moyens à commande hydraulique (67) et déplacer ainsi la barre de transmission (83), de manière à obliger les joints à bascule (63) à rétracter le cadre (58) contre la résistance de chacun des moyens élastiques (66), et pour purger ensuite la pression hydraulique, de manière à permettre aux moyens élastiques (66) des unités (68) de rétablir la position appropriée des dites positions actives.

2. Registre suivant la revendication 1, caractérisé en ce que chaque dispositif comprend une deuxième série de joints à bascule espacés (63), et une deuxième barre de manoeuvre (83) est reliée de façon pivotante à leurs articulations (63C) et à l'élément intermédiaire (72) de l'unité (68), les deux séries de joints à bascule (63) et leurs barres de manoeuvre (83) étant situées sur des côtés opposés de l'unité (68).

3. Registre suivant la revendication 1, caractérisé en ce que les moyens (50) de déplacement de la lame comprennent un moteur hydraulique et des moyens de distribution raccordant ce moteur au système hydraulique.

4. Registre suivant la revendication 1, caractérisé en ce que les moyens élastiques (66) comprennent un nombre substantiel de rondelles élastiques (77), constitué d'une pluralité de groupes de rondelles (77) disposées en parallèle, les groupes étant disposés en série, et des moyens (78, 80) maintiennent les groupes sous la forme d'un empilage tout en permettant la flexion de groupes.

5. Registre suivant la revendication 1, caractérisé en ce que chaque unité comprend des plaques d'extrémité (69, 70) et l'élément intermédiaire (72) est une plaque intermédiaire (72), de sorte que les plaques d'extrémité (69, 70) sont interconnectées par des tirants (71) qui supportent de façon coulissante la plaque intermédiaire (72) pour un mouvement limité par rapport aux plaques d'extrémité (69, 70), les moyens (67) à commande hydraulique étant situés entre la plaque intermédiaire (72) et une plaque d'extrémité (69), les moyens élastiques (66) étant situés entre la plaque intermédiaire (72) et l'autre plaque d'extrémité (70), et la barre de manoeuvre (83) étant reliée à la plaque intermédiaire (72).

6. Registre suivant la revendication 1, caractérisé en ce qu'au moins un joint à bascule (63) est espacé de chaque extrémité de chaque unité (68).

7. Registre suivant la revendication 5, caractérisé en ce que la dite autre plaque (70) de chaque unité (68) et la face la plus proche de la plaque intermédiaire (72) portent un boîtier (78, 79), le boîtier (79) de la plaque intermédiaire (72) s'étendant librement à l'intérieur du boîtier (78) de la plaque d'extrémité, une garniture flexible (81) interconnecte les deux boîtiers (78, 79) et les moyens élastiques (66) sont logés dans le boîtier (78, 79).

8. Registre suivant la revendication 5, caractérisé en ce que chaque tirant (71) comporte une butée fixe (73) contre laquelle la plaque intermédiaire (72) est appliquée par les moyens élastiques (66).

9. Registre suivant la revendication 1, caractérisé en ce que la partie de la chambre dans laquelle se trouve la lame (45) dans sa première position est un capot fermé (21) et la chambre comporte des orifices (92, 93) normalement fermés, situés près de sa base et près de l'extrémité supérieure du capot (21), pour permettre à l'espace intérieur de la chambre autour du passage de fluide d'être purgé à l'atmosphère lorsque le cadre de poussée (58) est en position active.

10. Registre suivant la revendication 1, caractérisé en ce qu'une garniture d'étanchéité flexible (61) entoure le passage de fluide et est reliée au cadre de poussée (58) et aux bords intérieurs de la manchette amont (22), une garniture d'étanchéité flexible (59) entoure le cadre (58) et est reliée à celui-ci et à la manchette aval (23), et la liaison entre les manchettes (22, 23) est une paroi extérieure de protection (29).

*Fig. 1*

*Fig. 6*

Fig. 2

Fig. 3

Fig.4

Fig. 5

0 056 374

**0 056 374**

*Fig. 7*

4

*Fig. 8*

*Fig.9*